(19) Europäisches Patentamt
European Patent Office
Office européen des brevets

(11) Veröffentlichungsnummer: **0 162 409**
**B1**

(12) # EUROPÄISCHE PATENTSCHRIFT

(45) Veröffentlichungstag der Patentschrift: **12.10.88**

(51) Int. Cl.⁴: **C 09 B 44/06**, D 06 P 1/41

(21) Anmeldenummer: **85105942.8**

(22) Anmeldetag: **14.05.85**

(54) **Basische Azofarbstoffe.**

(30) Priorität: **19.05.84 DE 3418672**

(43) Veröffentlichungstag der Anmeldung: **27.11.85 Patentblatt 85/48**

(45) Bekanntmachung des Hinweises auf die Patenterteilung: **12.10.88 Patentblatt 88/41**

(84) Benannte Vertragsstaaten: **CH DE FR GB IT LI**

(56) Entgegenhaltungen:
**DE-A-2 050 246**
**FR-A-1 169 603**
**US-A-2 219 280**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Colberg, Horst, Dr., Tilsiter Strasse 9, D-6707 Schifferstadt (DE)**
Erfinder: **Degen, Hans- Juergen, Dr., Schillerstrasse 6, D-6143 Lorsch (DE)**
Erfinder: **Dix, Johannes Peter, Dr., Ludwigshafener Strasse 125, D-6708 Neuhofen (DE)**

**EP 0 162 409 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft Verbindungen der allgemeinen Formel (I)

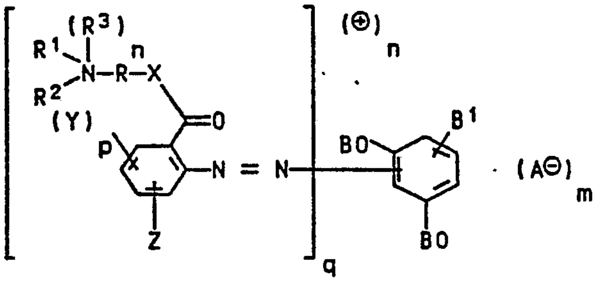

(I)

in der

Y Chlor oder Brom,

Z Wasserstoff, Chlor, Brom, Sulfonsäureester, Nitro oder gegebenenfalls substituiertes Sulfamoyl,

X -0

R gegebenenfalls durch Sauerstoff,

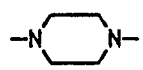

oder

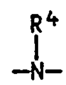

unterbrochenes $C_2$- bis $C_{10}$-Alkylen,

m die Zahlen 0, 1 oder 2,

n die Zahlen 0 oder 1,

p die Zahlen 0, 1 oder 2,

q die Zahlen 1 oder 2

$R^1$ und $R^2$ unabhängig voneinader Wasserstoff, gegebenenfalls durch N-Cycloalkylamino, N,N-Di-$C_1$- bis $C_5$-alkylamino, Hydroxy oder $C_1$- bis $C_8$-Alkoxy substituiertes $C_1$- bis $C_{14}$-Alkyl, Allyl, Methally, $C_5$- bis $C_8$-Cycloalkyl, Benzyl, Phenethyl, Phenyl oder Tolyl, oder

$R^1$ und $R^2$ zusammen mit dem Stickstoff Pyrrolidin, Piperidin, Morpholin, Piperazin, das am Stickstoff durch Methyl, Ethyl, n- und i-Propyl, n-, i-, sec.-Butyl, 2-Hydroxyethyl, 2-Aminoethyl, 2- oder 3-Hydroxypropyl, 2- oder 3-Aminopropyl substituiert sein kann, Imidazol, das in 2- und/oder 4-Stellung durch Methyl, Ethyl, Propyl oder Butyl substituiert sein kann oder N-3-($C_1$-bis $C_{12}$)-Alkyl- oder Vinyl-imidazol, das in 2- und/oder 4-Stellung noch durch Methyl, Ethyl, Propyl oder Butyl substituiert sein kann,

$R^3$ Wasserstoff, $C_1$- bis $C_{12}$-Alkyl, $C_2$- bis $C_4$-Hydroxyalkyl, Benzyl oder $CH_2CH_2(OH)CH_2Cl$.

B Wasserstoff oder $C_1$- bis $C_4$-Alkyl,

$B^1$ Wasserstoff, Hydroxy, $C_1$- bis $C_4$-Alkoxy oder -Alkyl und

$A^\ominus$ ein Anion sind, wobei

$R^4$ Wasserstoff oder $C_1$- bis $C_4$-Alkyl sind und der Rest

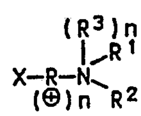

auch einen ggf. substituierten Piperazinrest

sowie der Rest

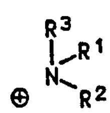

auch die Gruppe der Formel

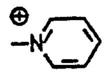

bedeuten kann.

Einzelne Reste Z sind neben den bereits genannten z. B.: $SO_2NH_2$, $SO_2NHCH_3$, $SO_2NHC_2H_5$, $SO_2NHC_3H_7$, $SO_2NHC_4H_9$, $SO_2NHC_6H_5$, $SO_2N(CH_3)_2$, $SO_2N(C_2H_5)_2$, $SO_2N(C_3H_7)_2$, $SO_2N(C_4H_9)_2$, $SO_2NHC_2H_4OH$,

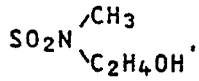,

$SO_2N(C_2H_4OH)_2$, $SO_2OCH_2CH_2N(CH_3)_2$, $SO_2OC_2H_4N(C_2H_5)_2$, $SO_2OC_2H_4N)C_4H_9)_2$, $SO_2OC_2H_4N(CH_2CH_2)_2O$, $SO_2OCH(CH_3)CH_2N(CH_3)_2$, $SO_2OCH(CH_3)CH_2N(C_2H_5)_2$, $SO_2OC_4H_8N(CH_3)_2$ oder $SO_2OC_4H_8N(C_2H_5)_2$.

Für Z sind Wasserstoff, Chlor oder Brom besonders bevorzugt.

Gegebenenfalls substituierte Alkylenreste R haben 2 bis 10 C-Atome, bevorzugt sind $C_2$- oder $C_3$-Reste.

Im einzelnen sind beispielsweise zu nennen:

$C_2H_4$, $C_3H_6$, 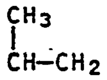, 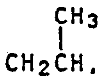, $C_4H_8$, 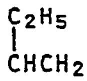, $C_6H_{12}$, 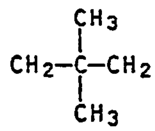, 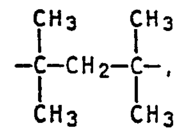,

$C_2H_4OC_2H_4$, $C_3H_6OC_3H_6$, $C_3H_6OC_2H_4OC_3H_6$, $C_3H_6OC_4H_8OC_3H_6$, $C_3H_6OC_2H_4OC_2H_4OC_3H_6$,

$C_2H_4NHC_2H_4$, $C_2H_4NHC_3H_6$, $C_3H_6NHC_3H_6$, $C_3H_6NHC_2H_4NHC_3H_6$, $C_3H_6NHC_6H_{12}NHC_3H_6$,

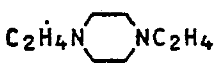 oder 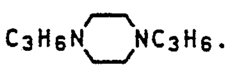.

Für $R^1$ und $R^2$ seien im einzelnen beispielsweise neben den bereits aufgeführten folgende Reste genannt: Methyl, Ethyl, n-Propyl, i-Propyl, n-Butyl, i-Butyl, n-Amyl, i-Amyl, n-Hexyl, i-Hexyl, Heptyl, Octyl, 2-Ethylhexyl, Decyl, Dodecyl, Tridecyl, Tetradecyl, 2-Hydroxyethyl, 2- oder 3-Hydroxypropyl, Hydroxybutyl, Cyclopentyl, Cyclohexyl oder Cyclooctyl, N,N-Dimethylaminoethyl, N,N-Diethylaminoethyl, N,N-Dipropylaminoethyl, N,N-Dibutylaminoethyl, 3-(N,N-Dimethylamino)-propyl, 3-(N,N-Diethylamino)-propyl, 3-(N,N-Dipropylamino)-propyl oder 3-(N,N-Dibutylamino)-propyl, N-Cyclohexylaminoethyl, 3-(N-Cyclohexylamino)-propyl oder 3-(N-Cyclooctylamino)-propyl.

Bevorzugte Reste $R^1$ und $R^2$ sind z. B.: Methyl, Ethyl, n-Propyl, i-Propyl, $C_2$- oder $C_3$-Hydroxyalkyl oder Cyclohexyl.

Bevorzugte heterocyclische Reste 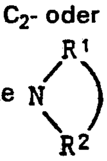 sind z. B. die von:

Morpholin, Piperidin, 4-Methylpiperazin, 4-Ethylpiperazin, 4-Hydroxyethypiperazin, 4-(2'-Aminoethyl)-piperazin, Imidazol, 2-Methylimidazol oder 4-Methylimidazol.

Der Rest 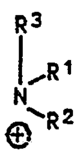 kann auch eine Gruppe der Formel 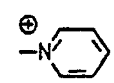 sein.

Für $R^3$ kommen daneben z. B. $C_1$- bis $C_{12}$-Alkyl oder $C_2$- bis $C_4$-Hydroxyalkyl wie Methyl, Ethyl, n- oder i-Propyl, n- oder i-Butyl, n- oder i-Amyl, n-oder i-Hexyl, Octyl, 2-Ethylhexyl, Decyl, Dodecyl, 2-Hydroxyethyl, 2- oder 3-Hydroxypropyl, Hydroxybutyl, Benzyl, $CH_2CH_2(OH)CH_2Cl$ oder $CH_2CH(OH)CH_2OH$ in Betracht.

Vorzugsweise steht $R^3$ für $C_1$- bis $C_4$-Alkyl, $C_2$- bis $C_4$-Hydroxyalkyl oder Benzyl.

Für $R^3$ sind Methyl, Ethyl oder $C_2$- oder $C_3$-Hydroxyalkyl besonders bevorzugt.

B und $B^1$ sind vorzugsweise Wasserstoff, daneben ist für B noch bevorzugt Methyl zu nennen, wobei die Reste B unanbhängig voneinander sind.

Anionen $A^\ominus$ sind z. B: Chlorid, Bromid, Hydrogensulfat, Sulfat, Nitrat, Phosphat, Hydrogenphosphat, Dihydrogenphosphat, Carbonat, Hydrogencarbonat, Tetrachlorozinkat, Aminosulfonat, Methylsulfonat, Methylsulfat, Ethylsulfat, Formiat, Acetat, Hydroxyacetat, Aminoacetat, Methoxyacetat, Propionat, Lactat, Maleinat, Malonat, Citrat, Benzoat, Phthalat, Benzolsulfonat, Toluolsulfonat, Oleat oder Dodecylbenzolsulfonat.

Zur Herstellung der Verbindungen der Formel I kann man z. B. Amine der Formel II

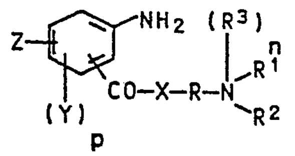

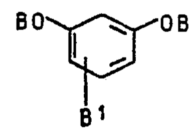 III

diazotieren und mit einer Kupplungskomponente der Formel III umsetzen.

Einzelheiten der Herstellung können den Beispielen entnommen werden.

Die Verbindungen der Formel I eignen sich zum Färben von sauer modifizierten Fasern wie Polyacrylnitril oder Polyestern, Leder und insbesondere Papier. Auch läßt sich insbesondere Papier mit Druckfarben bedrucken, die wäßrige Lösungen von Säureadditionssalzen von I enthalten. In Form der Basen oder Salze mit längerkettigen Carbon- oder Sulfonsäuren wie Ölsäure oder Dodecylbenzolsulfosäure kommen sie auch z. B. für Kugelschreiberpasten als Solventfarbstoffe oder für nicht wäßrige Druckfarben in Betracht. Mit entsprechenden Anionen sind die Farbstoffe als Säureadditionssalze auch leicht in Wasser und organischen Lösungsmitteln löslich, so daß sie sich zur Herstellung von flüssigen Konzentraten eignen.

Von besonderer Bedeutung sind Verbindungen der Formel I a

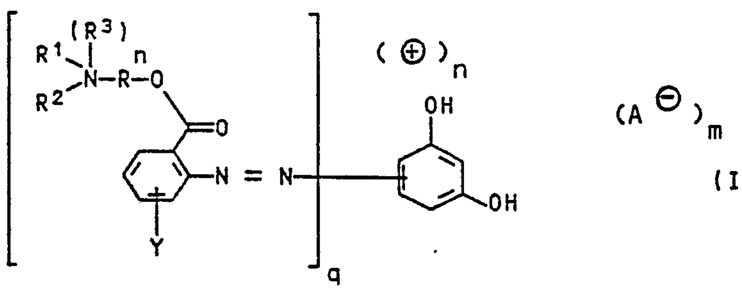 (I a),

in der A ⊖, R, $R^1$, $R^2$, $R^3$, n, m, q und Y die angegebene Bedeutung haben.

Bevorzugt für R sind dabei R $C_2H_4$, $C_3H_6$, $-CH(CH_3)CH_2$ oder $C_4H_8$.

$R^1$ und $R^2$ sind vorzugsweise: H, $CH_3$, $C_2H_5$, n-, i-$C_3H_7$, n-, i-, sec.-$C_4H_9$,

$C_2H_4OCH_3$, 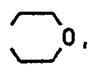, 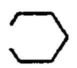, 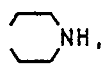, 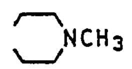, 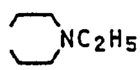, 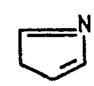 oder

Cyclohexyl und

$R^3$ $CH_3$, $C_2H_5$ oder $C_2H_4OH$.

In den folgenden Beispielen beziehen sich Angaben über Teile und Prozente, sofern nicht anders vermerkt, auf das Gewicht.

**Beispiel 1**

Herstellung der Diazokomponente: Zu 326 Teilen Isatosäureanhydrid in 1000 Teilen Dioxan tropft man bei 60°C 187 Teile Dimethylamino-ethanol zu. Man rührt 1 Stunde nach, engt im Wasserstrahlvakuum ein und destilliert im Feinvakuum Bei 160°C/0,1 Torr gehen 402 Teile Anthranilsäure-2'-di-methylaminoethylester über.

21 Teile Anthranilsäure-2'-dimethylaminoethylester werden in einem Gemisch aus 50 Teilen Wasser, 25 Teilen Eisessig und 30 Teilen konz. Salzsäure gelöst und nach dem Abkühlen auf 5°C mit 34,6 Tl. einer 23 %-igen wäßrigen Lösung von Natriumnitrit tropfenweise versetzt. Nach drei Stunden wird überschüssiges Nitrit durch Zugabe von Amidosulfonsäure zerstört. Man gibt dann eine Lösung von 11 Teilen Resorcin in 30 Teilen warmem Wasser zu und ruhrt nach dem Abstumpfen mit Natriumacetat auf pH 5 über Nacht bei Raumtemperatur. Nach dem Abkühlen auf 0°C wird mit 5N Natronlauge langsam pH 7 eingestellt. Nach 4 Stunden ist der anfallende Farbstoff durchkristallisiert und kann abgesaugt und mit Wasser gewaschen werden. Lufttrocknung ergibt 22 g Farbstoffpulver. Der Farbstoff läßt sich mit Eisessig und Wasser zu einer stabilen 20 %-igen Flüssigeinstellung auflösen. Er färbt Papierfarbstoff gelb. Der Farbton entspricht No. 4, Colour Index Hue Indication Chart. Das Abwasser ist nur schwach gefärbt. Die gefärbten Papiere lassen sich durch Hydrosulfit ausbleichen. Die gelöste Verbindung entspricht der Formel

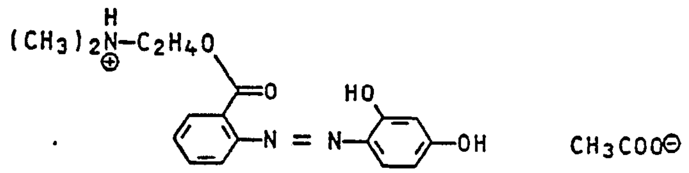

Analog dem beschriebenen Verfahren lassen sich weitere Farbstoffe herstellen, die im Farbton und der Affinität zu Papierstoff weitgehend dem Beispiel 1 entsprechen.

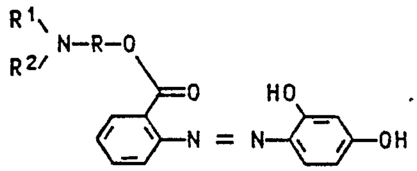

| Beispiel Nr. | $-R-NR^1R^2$ |
|---|---|
| 22 | 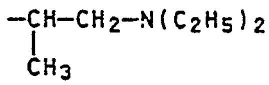 |
| 23 | 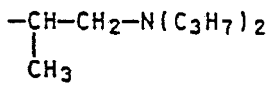 |
| 24 | 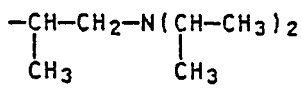 |
| 25 | 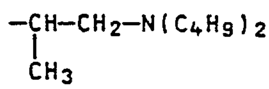 |
| 26 | 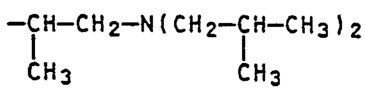 |
| 27 | 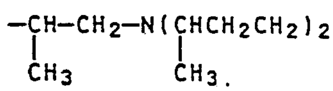 |
| 28 | 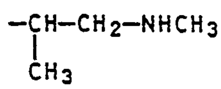 |
| 29 | 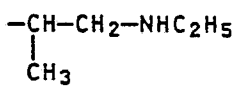 |
| 30 | 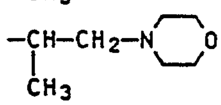 |
| 31 | 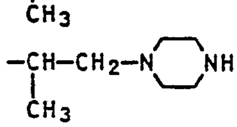 |
| 32 | 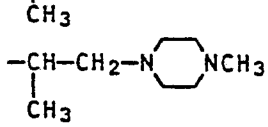 |
| 33 | 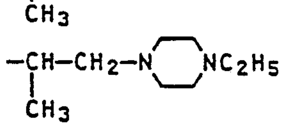 |
| 34 | 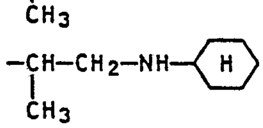 |
| 35 | 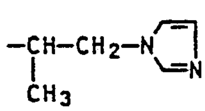 |

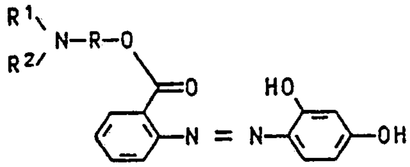

| Beispiel Nr. | $-R-NR^1R^2$ |
|---|---|
| 36 | $-CH-CH_2-N(C_2H_4OCH_3)_2$<br>$CH_3$ |
| 37 | $-C_3H_6N(CH_3)_2$ |
| 38 | $-C_3H_6N(C_2H_5)_2$ |
| 39 | 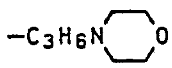 |
| 40 | 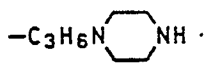 |
| 41 | 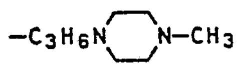 |
| 42 | $-CH_2CH-N(CH_3)_2$<br>$C_2H_5$ |
| 43 | $-CH_2CH-N(C_2H_5)_2$<br>$C_2H_5$ |
| 44 | $-CH_2CH-N(C_3H_7)_2$<br>$C_2H_5$ |
| 45 | 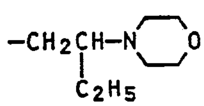 |
| 46 | 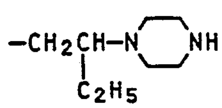 |
| 47 | 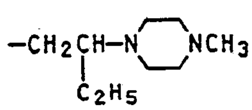 |
| 48 | $-C_4H_8-N(CH_3)_2$ |
| 49 | $-C_4H_8-N(C_2H_5)_2$ |
| 50 | $-C_4H_8-N(C_3H_7)_2$ |
| 51 | 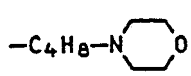 |

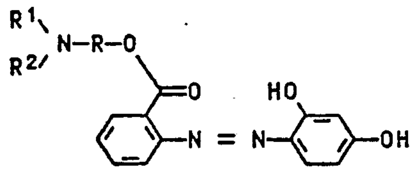

| Beispiel Nr. | $-R-NR^1R^2$ |
|---|---|
| 2 | $-C_2H_4N(CH_3)_2$ |
| 3 | $-C_2H_4N(C_2H_5)_2$ |
| 4 | $-C_2H_4N(C_3H_7)_2$ |
| 5 | $-C_2H_4N(CH\begin{matrix}/CH_3\\ \backslash CH_3\end{matrix})_2$ |
| 6 | $-C_2H_4N(C_4H_9)_2$ |
| 7 | $-C_2H_4N(CH_2\underset{CH_3}{\underset{\vert}{C}}H-CH_3)_2$ |
| 8 | $-C_2H_4N(\underset{CH_3}{\underset{\vert}{C}}H-C_2H_5)_2$ |
| 9 | $-C_2H_4NHCH_3$ |
| 10 | $-C_2H_4NHC_2H_5$ |
| 11 | $-C_2H_4N\ \ (CH_2)_5$ |
| 12 | $-C_2H_4N\ \ (CH_2)_6$ |
| 13 | 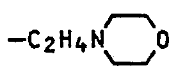 |
| 14 | 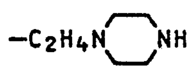 |
| 15 | 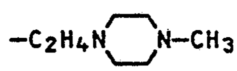 |
| 16 | 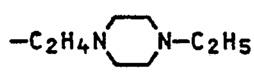 |
| 17 | 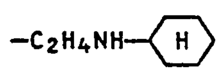 |
| 18 | 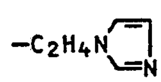 |
| 19 | $-C_2H_4N(C_2H_4OCH_3)_2$ |
| 20 | $-C_2H_4N(C_2H_4OC_2H_5)_2$ |
| 21 | $-\underset{CH_3}{\underset{\vert}{C}}H-CH_2-N(CH_3)_2$ |

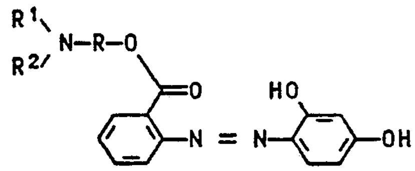

| Beispiel Nr. | $-R-NR^1R^2$ |
|---|---|
| 52 | 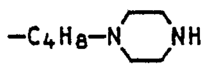 |
| 53 | 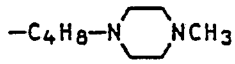 |

Analog Beispiel 1 lassen sich aus den entsprechenden halogenierten bzw. sulfochlorierten Derivaten des Isatosäureanhydrids weitere Farbstoffe herstellen, die Papier gelb färben entsprechend No, 4, Colour Index Hue Indication Chart.

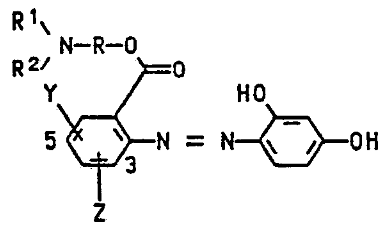

| Bsp.-Nr | $COOR-N(R^1)(R^2)$ | Y | Z |
|---|---|---|---|
| 54 | $COOC_2H_4N(CH_3)_2$ | 5–Cl | H |
| 55 | 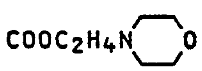 | 5–Cl | H |
| 56 | $COOC_2H_4N(CH_3)_2$ | 5–Br | H |
| 57 | 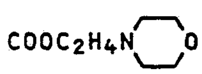 | 5–Br | H |
| 58 | $COOC_2H_4N(CH_3)_2$ | 3–Cl | 5-Br |
| 59 | $COOC_2H_4N(CH_3)_2$ | 5-Br | 3-Cl |
| 60 | $COOC_2H_4N(CH_3)_2$ | H | $5-SO_2OC_2H_4N(CH_3)_2$ |

**Beispiel 61**

Diazokomponente: 187,2 Teile 5-Nitroisatosäureanhydrid werden bei 60°C in ein Gemisch aus 600 Teilen Dioxan und 85 Teilen N,N-Dimethylethanolamin eingetragen. Nach dem Ende der Gasentwicklung kühlt man auf Raumtemperatur ab, filtriert und rührt das Filtrat in viel Wasser ein. Der Niederschlag wird abgesaugt und getrocknet. Die Ausbeute beträgt 125 Teile. Nach dem Umkristallisieren aus wäßrigem Ethanol ergibt die Elementaranalyse in Prozent

$C_{11}H_{15}O_4N_3$ ber. C 52,2 H 6,0 O 25,3 N 16,6

gef. C 51,6 H 5,6 O 26,5 N 16,3

Das Diazotierungsäquivalent beträgt 261 g/val (theor. 253 g/val).

Diazotierung und Kupplung auf β-Naphthol analog Beispiel 1 ergibt einen Farbstoff, der aus wäßrigessigsaurer Lösung Papierstoff gelb anfärbt. In saurer Lösung entspricht die Verbindung der Formel:

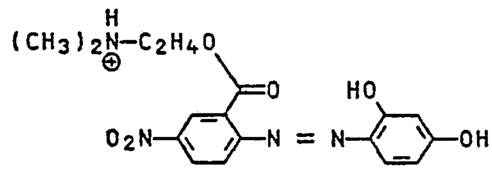

$CH_3COO^{\ominus}$

Die nachfolgenden gelben Farbstoffe lassen sich analog Beispiel 61 unter Verwendung anderer Aminoalkohole herstellen.

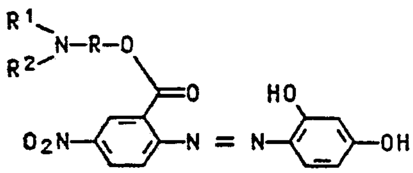

| Bsp.-Nr. | 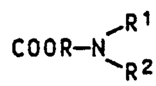 |
|---|---|
| 62 | 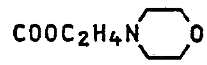 |
| 63 | $COOC_2H_4N(C_2H_5)_2$ |
| 64 | 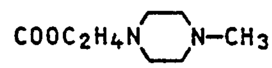 |

**Beispiel 65**

Herstellung der Diazokomponente: Nach Beispiel 1 hergestellte Diazokomponente wird destilliert. 21 Teile werden in 100 Teilen Toluol tropfenweise bei 60° C mit 13 Teilen Dimethylsulfat versetzt. Man rührt eine Stunde bei dieser Temperatur nach, kühlt auf Raumtemperatur und saugt den Niederschlag ab. Nach der Trocknung beträgt das Diazotierungsäquivalent 355 g/val (Theorie 334 g/val). Die Verbindung entspricht der Formel

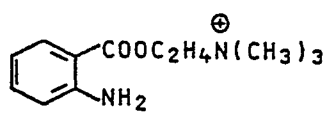

$CH_3OSO_3^{\ominus}$

Nach Diazotierung und Kupplung analog Beispiel 1 stellt man mit Natronlauge alkalisch, dekantiert die wäßrige Phase vom schmierigen Farbstoff und löst in wäßrigem Eisessig. Der Farbstoff färbt Papierstoff blau bei mäßiger Abwasseranfärbung und entspricht nun der Formel

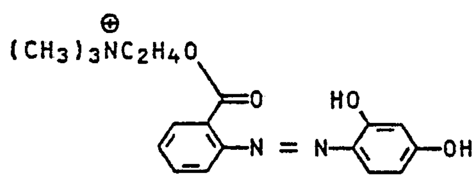

$CH_3COO^{\ominus}$

**Beispiel 66**

Entsprechend Beispiel 1 werden 55 Tle. lufttrockenen Farbstoffs hergestellt und in eine 70° C warme Lösung von 55 Teilen Dodecylbenzolsulfosäure in 100 Teilen Ethanol eingetragen. Die Lösung enthält nun Farbstoff der Formel

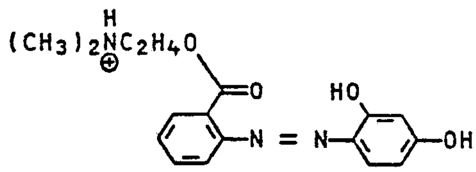

$C_{12}H_{25}C_6H_4SO_3^{\ominus}$

und kann als Bestandteil einer flexographischen Druckfarbe verwendet werden.

**Beispiel 67**

Entsprechend Beispiel 1 werden 55 Tle. lufttrockenen Farbstoffs hergestellt und zusammen mit 27 Teilen Magnesiumoxid in 250 Teilen 1,2-Dichloräthan eingetragen. Bei 70° C tropft man 20 Vol.-Teile Dimethylsulfat zu. 1/2 Stunde wird nachgerührt, dann abgesaugt und getrocknet. Man erhält 93 Teile Pulver, das neben Fremdsalzen aus dem Farbsalz der Formel

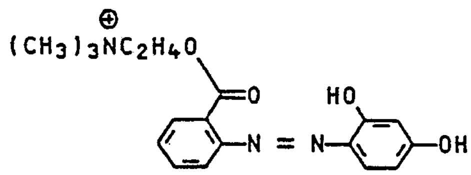

$CH_3OSO_3^{\ominus}$

besteht und Papier aus wäßriger, essigsaurer Lösung gelb färbt.

**Beispiel 68**

292 Teile Anthranilsäure-2'-dibutylaminoethylester werden analog Beispiel 1 diazotiert. 55 Teile Resorcin werden in 500 Teilen warmem Wasser unter Zusatz von 500 Teilen Isobutanol gelöst und zur Diazoniumsalzlösung gegeben. Durch Zusatz von Natriumcarbonatlösung wird der pH-Wert langsam auf 0,8 angehoben. Nach Rühren über Nacht wird auf pH 6 gestellt, die organische Phase abgetrennt und das Isobutanol abdestilliert. Der Rückstand wird zusammen mit 260 Teilen Dodecylbenzolsulfosäure in 300 Teilen Ethanol aufgelöst. Der gelöste Farbstoff hat die Formel

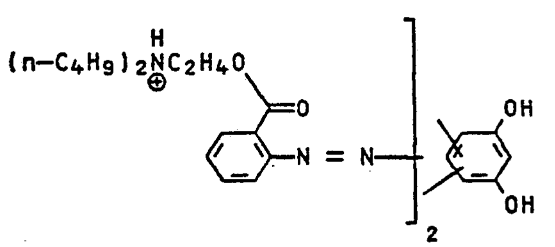

$[C_{12}H_{25}C_6H_4SO_3^{\ominus}]_2$

**Beispiel 69**

Einer Suspension von 50 Teilen gebleichtem Sulfatzellstoff von ca. 30° SR in 2000 Teilen Wasser bei pH 7 werden 2 Teile einer 10-proz. essigsauren Lösung des Farbstoffs aus Beispiel 1 zugegeben. Das Gemisch wird 15 Minuten bei 20 bis 25°C gerührt und dann mit Wasser auf 0,2 % Feststoffgehalt verdünnt. Mit dieser Suspension werden auf einem Laborblattbildner Papierblätter hergestellt und die Blätter 5 Minuten bei 100°C getrocknet. Man erhält gelb gefärbte Blätter. Das Abwasser ist schwach gefärbt, die Ausblutechtheit gegen wäßrige Sodalösung gut. Verwendet man statt gebleichtem Zellstoff holzhaltigen Zellstoff, so ist das Abwasser nur noch schwach gefärbt bei guter Ausblutechtheit gegen Wasser und hervorragender gegen wäßrige Sodalösung. Verwendung der Farbstoffe aus Beispiel 2 - 67 erbringt ähnlich gute Färbeergebnisse.

**Beispiel 70**

2,5 Teile Pulverfarbstoff nach Beispiel 6 werden in einem Gemisch aus 10 Teilen eines Hartharzes aus Styrol und Maleinsäureester mit einem Erweichungspunkt von 160 - 175°C, 16 Teilen der 60 proz. Lösung eines Kondensationsproduktes aus tert.-Butylphenol, Formaldehyd und Salicylsäure im Molverhältnis 1 : 1,4 : 0,8 in einem 9 : 1-Gemisch aus Ethanol und Ethylglykol und 74 Teilen eines 9 : 1-Gemisches aus Ethanol und einem Gemisch aus ca. 98 % 1-Methoxypropanol-2 und 2 % 2-Methoxypropanol-1 gelöst. Mit dieser Lösung lassen sich z. B. Papier oder Aluminiumfolie in rotstichig gelbem Farbton (No. 4, Colour Index Hue Indication Chart) bedrucken.

Mit der Lösung von 6,5 Teilen Flüssigfarbstoff aus Beispiel 68 in der vorstehend beschriebenen Menge an Lack läßt sich z. B. Papier oder Aluminiumfolie in gelb-braunem Farbton (No. 5, Colour Index Hue Indication Chart) bedrucken.

**Beispiel 71**

In eine gerührte Suspension aus 100 Teilen eines Gemisches von 70 % gebleichtem Kiefernsulfatzellstoff und 30 % gebleichtem Birkensulfatzellstoff mit ca. 30° SR im Gesamtstoff in 2000 Teilen Wasser werden 1,0 Teile des Vermahlungsproduktes aus 90 % Farbstoff nach Beispiel 1 und 10 % Amidosulfonsäure eingestreut und 10 Minuten verrührt. Nach Verdünnung mit Wasser auf 0,2 % Feststoffgehalt werden auf einem Laborblattbildner Papierblätter hergestellt und die Blätter 5 Minuten bei 100° C getrocknet. Man erhält gleichmäßig gelb gefärbte Blätter mit guter Ausblutechtheit gegen Wasser. Verwendung von Vermahlungsprodukten der Farbstoffe aus Beispiel 2 - 67 mit Amidosulfonsäure erbringt ähnlich gute Färbeergebnisse, ebenso die Verwendung von Säureadditionssalzen.

**Beispiel 72**

Eine saugfähige Papierbahn aus ungeleimten Papier wird bei 40 - 50° C durch eine Farbstofflösung gezogen, die sich zusammensetzt aus 0,5 Teilen Farbstoff aus Beispiel 1, 0,5 Teilen Stärke, 3 Teilen Essigsäure und 96 Teilen Wasser. Die überschüssige Farbstofflösung wird zwischen zwei Walzen abgepreßt. Die getrocknete Papierbahn ist gelb gefärbt.

Analog können auch die Farbstoffe aus Beispiel 2 - 67 eingesetzt werden.

**Patentansprüche**

1. Verbindungen der allgemeinen Formel I

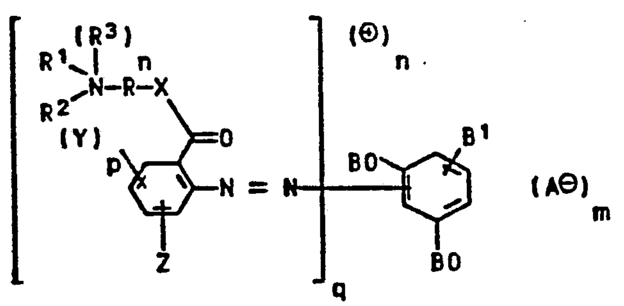

(I)

in der
Y Chlor oder Brom,
Z Wasserstoff, Chlor, Brom, Sulfonsäureester, Nitro oder gegebenenfalls substituiertes Sulfamoyl,
X -O
R gegebenenfalls durch Sauerstoff.

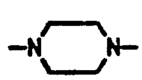

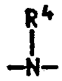

oder unterbrochenes $C_2$- bis $C_{10}$-Alkylen,

m die Zahlen 0, 1 oder 2,

n die Zahlen 0 oder 1,

p die Zahlen 0, 1 oder 2,

q die Zahlen 1 oder 2

$R^1$ und $R^2$ unabhängig voneinader Wasserstoff, gegebenenfalls durch N-Cycloalkylamino. N,N-Di-$C_1$- bis $C_5$-alkylamino, Hydroxy oder $C_1$- bis $C_8$-Alkoxy substituiertes $C_1$- bis $C_{14}$-Alkyl, Allyl, Methally, $C_5$- bis $C_8$-Cycloalkyl, Benzyl, Phenethyl, Phenyl oder Tolyl, oder

$R^1$ und $R^2$ zusammen mit dem Stickstoff Pyrrolidin, Piperidin, Morpholin, Piperazin, das am Stickstoff durch Methyl, Ethyl, n- und i-Propyl, n-, i-, sec.-Butyl, 2-Hydroxyethyl, 2-Aminoethyl, 2- oder 3-Hydroxypropyl, 2- oder 3-Aminopropyl substituiert sein kann. Imidazol, das in 2- und/oder 4-Stellung durch Methyl, Ethyl, Propyl oder Butyl substituiert sein kann oder N-3-($C_1$-bis $C_{12}$)-Alkyl- oder Vinyl-imidazol, das in 2- und/oder 4-Stellung noch durch Methyl, Ethyl, Propyl oder Butyl substituiert sein kann,

$R^3$ Wasserstoff, $C_1$- bis $C_{12}$-Alkyl, $C_2$- bis $C_4$-Hydroxyalkyl, Benzyl oder $CH_2CH_2(OH)CH_2Cl$.

B Wasserstoff oder $C_1$- bis $C_4$-Alkyl,

$B^1$ Wasserstoff, Hydroxy, $C_1$- bis $C_4$-Alkoxy oder -Alkyl und

A⊖ ein Anion sind, wobei

$R^4$ Wasserstoff oder $C_1$- bis $C_4$-Alkyl sind und der Rest

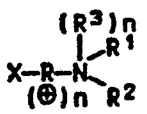 auch einen ggf. substituierten Piperazinrest

sowie der Rest

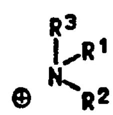

auch die Gruppe der Formel

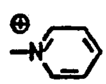

bedeuten kann.

2. Verbindungen gemäß Anspruch 1 der Formel

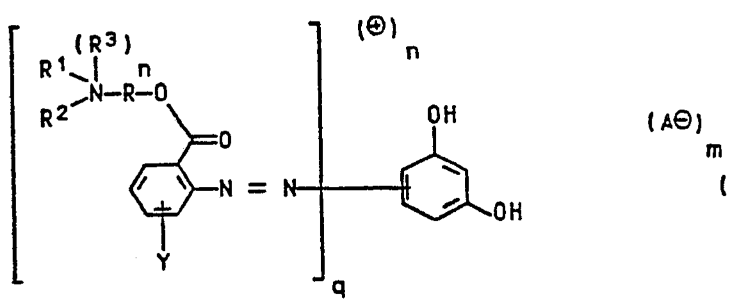 (I a),

in der A⊖, R, $R^1$, $R^2$, $R^3$, n, m, q und Y die angegebene Bedeutung haben.

3. Verwendung der Verbindungen gemäß Anspruch 1 oder 2 zum Färben oder Bedrucken von anionisch modifizierten Fasern, Leder, Papier oder Karton sowie in Tinten oder Druckfarben.

**Claims**

1. A compound of the formula I

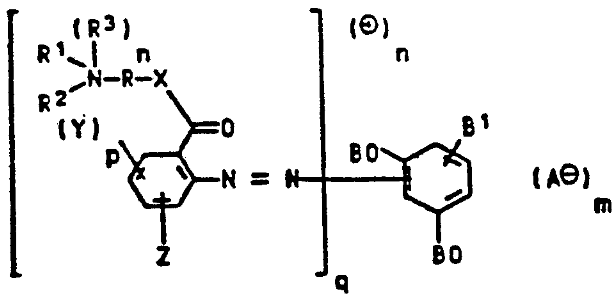 (I)

where Y is chlorine or bromine, Z is hydrogen, chlorine, bromine, a sulfonic ester group, nitro or unsubstituted or substituted sulfamyl, X is -O-, R is $C_2$-$C_{10}$-alkylene

which may or may not be interrupted by oxygen, 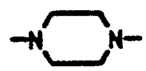 or 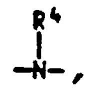,

m is 0, 1 or 2, n is 0 or 1, p is 0, 1 or 2, q is 1 or 2, $R^1$ and $R^2$ independently of one another are each hydrogen, unsubstituted or N-cycloalkylamino-, N,N-di-$C_1$-$C_5$-alkylamino-, hydroxyl- or $C_1$-$C_8$-alkoxy-substituted $C_1$-$C_{14}$-alkyl, allyl, methallyl, $C_5$-$C_8$-cycloalkyl, benzyl, phenethyl, phenyl, or tolyl, or $R^1$ and $R^2$, together with the nitrogen atom, are pyrrolidine, piperidine or morpholine, or piperazine which may be substituted on the nitrogen by methyl, ethyl, n-propyl, isopropyl, n-butyl, isobutyl, sec-butyl, 2-hydroxyethyl, 2-aminoethyl, 2-hydroxypropyl, 3-hydroxypropyl, 2-aminopropyl or 3-aminopropyl, or imidazole which may be substituted in the 2-and/or 4-position by methyl, ethyl, propyl or butyl, or N-3-($C_1$-$C_{12}$-) alkylimidazole, or vinylimidazole which may be further substituted in the 2- and/ or 4- position by methyl, ethyl, propyl or butyl, $R^3$ is hydrogen, $C_1$-$C_{12}$-alkyl, $C_2$-$C_4$-hydroxyalkyl, benzyl or $CH_2CH_2(OH)CH_2Cl$, B is hydrogen or $C_1$-$C_4$-alkyl, $B^1$ is hydrogen, hydroxyl, $C_1$-$C_4$-alkoxy or $C_1$-$C_4$-alkyl, A⊖ is an anion, $R^4$ is hydrogen or $C_1$-$C_4$-alkyl, and the radical

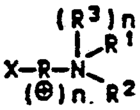 may furthermore be an unsubstituted or substituted piperazine radical and the radical

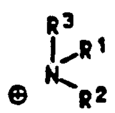

may furthermore be the group of the formula

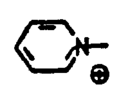

2. A compound as claimed in claim 1, of the formula

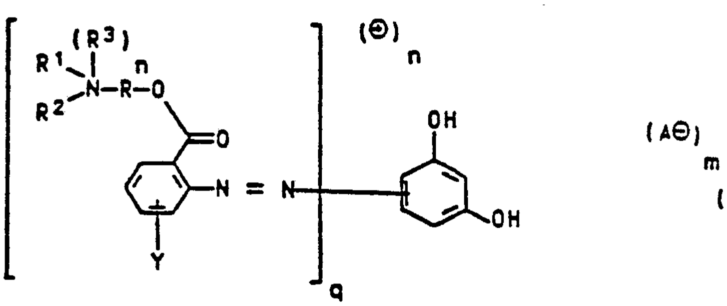 (I a),

where A⊖, R, $R^1$, $R^2$, $R^3$, n, m, q and Y have the stated meanings.

3. Use of a compound as claimed in claim 1 or 2 for dyeing or printing anionically modified fibers, leather, paper or cardboard, and in inks or printing inks.

**Revendications**

1. Composés de formule générale I

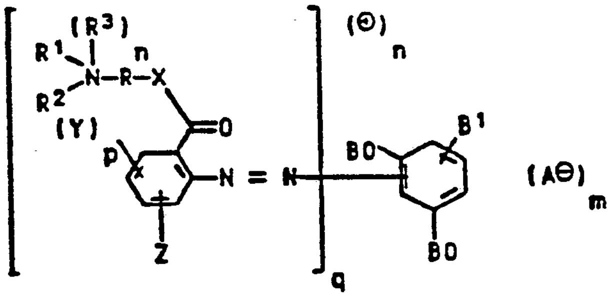 (I)

dans laquelle

Y représente un atome de chlore ou de brome,

Z représente un atome d'hydrogène, de chlore, de brome, un groupement ester d'acide sulfonique, nitro ou sulfamoyle éventuellement substitué,

X représente -O-,

R représente un groupement alkylène en $C_2$ à $C_{10}$ éventuellement interrompu par un atome d'oxygène, par

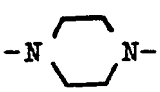 ou par 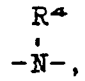,

m représente l'un des nombres 0, 1 et 2,

n représente le nombre 0 ou 1,

p représente l'un des nombres 0, 1 et 2,

q représente le nombre 1 ou 2,

$R^1$ et $R^2$, indépendamment l'un de l'autre, représentent chacun un atome d'hydrogène, un radical alkyle en $C_1$ à $C_{14}$ eventuellement substitué par un groupement N-cycloalkylamino, N,N-di-$C_1$-$C_5$-alkylamino, hydroxy ou alcoxy en $C_1$ à $C_8$, pour un radical allyle, méthallyle, cycloalkyle en $C_5$ à $C_8$, benzyle, phénéthyle, phényle ou tolyle, ou

$R^1$ et $R^2$ forment ensemble, avec l'atome d'azote, un radical pyrrolidine, pipéridine, morpholine, pipérazine qui peut être substitué sur l'atome d'azote par un groupement méthyle, éthyle, n- et i-propyle, n-, i-, sec.-butyle, 2-hydroxyéthyle, 2-aminoéthyle, 2-ou 3-hydroxypropyle, 2- ou 3-aminopropyle; un radical imidazole qui peut être substitué, en position 2 et/ou 4 par un groupement méthyle, éthyle, propyle ou butyle; ou un radical N-3-($C_1$-$C_{12}$)-alkyl- ou vinyl-imidazole qui peut être encore substitué par un groupement méthyle, éthyle, propyle ou butyle,

$R^3$ représente un atome d'hydrogène, un radical alkyle en $C_1$ à $C_{12}$, hydroxyalkyle en $C_2$ à $C_4$, benzyle ou $CH_2CH_2(OH)CH_2Cl$,

B représente un atome d'hydrogène ou un radical alkyle en $C_1$ à $C_4$,

$B^1$ représente un atome d'hydrogène, un radical hydroxy, alcoxy ou alkyle en $C_1$ à $C_4$, et

A⊖ représente un anion,

$R^4$ étant un atome d'hydrogène ou un radical alkyle en $C_1$ à $C_4$, le radical

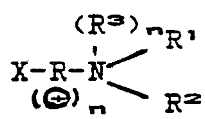

pouvant également représenter un radical pipérazine éventuellement substitué et le radical

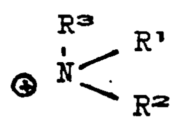

pouvant également représenter le groupement de formule

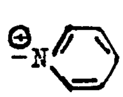

2. Composés selon la revendication 1 de formule

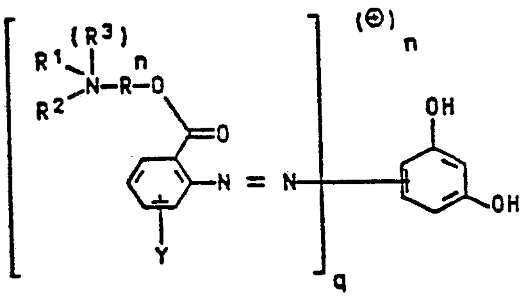

$(A^{\ominus})_m$ (I a),

dans laquelle $A^{\ominus}$, R, $R^1$, $R^2$, $R^3$, n, m, q et Y ont les significations indiquées.

3. Utilisation des composés selon la revendication 1 ou 2 pour la teinture ou l'impression de fibres, cuirs, papiers ou cartons modifiés anioniquement, ainsi que dans des encres ou des couleurs d'imprimerie.